# EUROPÄISCHE PATENTSCHRIFT

(11) **EP 2 479 628 B1**
(45) Veröffentlichungstag und Bekanntmachung des Hinweises auf die Patenterteilung: **23.08.2017**
(21) Anmeldenummer: 11194309.8
(22) Anmeldetag: 19.12.2011
(51) Int. Cl.: G05B 19/414, G05B 19/408

(54) **Numerische Steuerung**
Numerical control
Commande numérique

(30) Priorität: 19.01.2011 DE 102011002850
(43) Veröffentlichungstag der Anmeldung: 25.07.2012
(73) Patentinhaber: Dr. Johannes Heidenhain GmbH, 83301 Traunreut (DE)
(72) Erfinder: Kohler, Frieder, 83362 Lauter (DE)

(56) Entgegenhaltungen:
- EP-A1- 1 818 744
- EP-A2- 1 755 009
- WO-A2-2006/029994
- DE-A1- 10 311 026

## Beschreibung

Die Erfindung betrifft eine Numerische Steuerung, wie sie üblicherweise zum Ansteuern der Antriebe einer Werkzeugmaschine verwendet wird. Solche Numerischen Steuerungen kommen an unterschiedlichsten Maschinentypen zum Einsatz und müssen daher möglichst gut an die jeweilige Maschine anpassbar sein.

Eine Numerische Steuerung muss Maschinen mit mehreren beweglichen Achsen ansteuern können. So sind etwa Werkzeugmaschinen zur 5-Achsbearbeitung verbreitet, bei denen zu den schon länger üblichen drei Linearachsen noch zwei Schwenk- oder Winkelachsen kommen, um ein Werkstück möglichst in einer Aufspannung von allen Seiten bearbeiten zu können.

Für jeden Antrieb einer solchen Werkzeugmaschine muss die Steuerung einen Antriebsregler bereit halten, dessen Aufgabe darin besteht, die jeweilige Achse gemäß einem Teileprogramm zu bewegen.

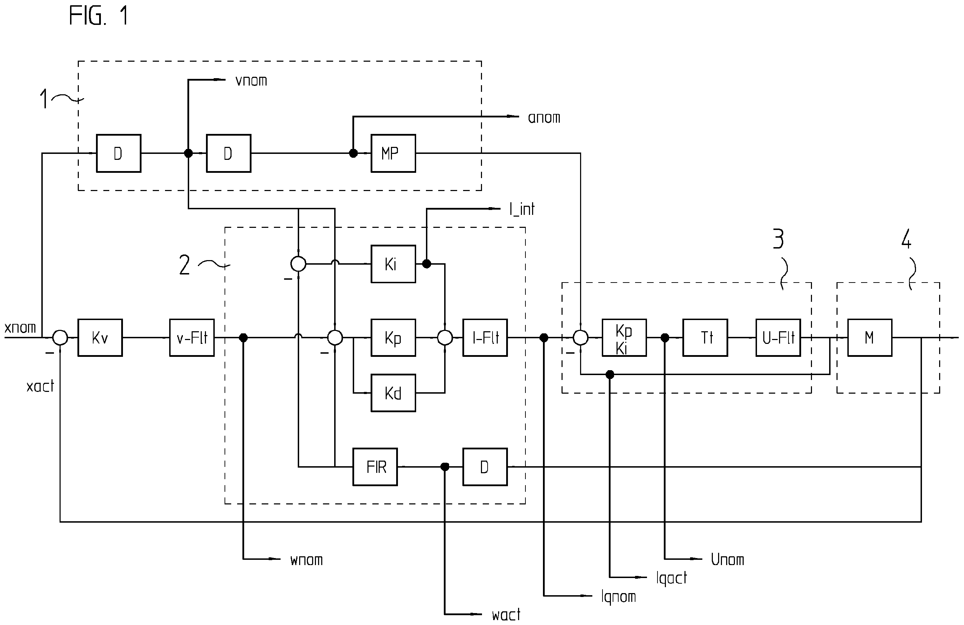

Hierzu wird vom sogenannten Interpolator ein Lagesollwert an den Antriebsregler ausgegeben. Ein Blockschaltbild eines üblichen Antriebsreglers für eine Achse ist in der Figur 1 gezeigt. Die Abweichung des Lageistwerts xact vom Lagesollwert xnom wird an einen Lageregler gegeben, der einen Geschwindigkeits- bzw. Drehzahlsollwert wnom bildet, indem die Abweichung mit einem Verstärkungsfaktor Kv multipliziert wird. Der Geschwindigkeitssollwert wnom wird im Geschwindigkeitsregler 2 verarbeitet. Dessen Ausgang wird als Stromsollwert Iqnom einem Stromregler 3 übergegen, über den letztlich der Motor 4 der Achse angesteuert wird. Der Stromistwert Iqact, der Geschwindigkeitsistwert wact und der Lageistwert xact werden dabei wie üblich verwendet, um die kaskadierten Regelkreise zu schließen.

Um schneller auf Änderungen im Lagesollwert reagieren zu können, erfolgt mittels einer Vorsteuereinheit 1 eine Vorsteuerung von Drehzahl (bzw. Geschwindigkeit) und Strom, unter Umgehung des jeweiligen Reglers. Hierzu werden mit Differenzierern D die erste bzw. zweite Ableitung des Lagesollwerts xnom ermittelt, die als vnom bzw. anom dem Geschwindigkeitsregler 2 bzw. dem Stromregler 3 zugeführt werden.

An verschiedensten Stellen im Antriebsregler können Filter v-Flt, I-Flt, U-Flt, FIR wirken, mit denen die Dämpfung von unerwünschten Resonanzen möglich ist.

Ein Regelkreis wie hier gezeigt, ist über zahlreiche Parameter einstellbar. So sind die Verstärkungsfaktoren Kp, Ki, Kd der P-, I- und D-Anteile der verschiedenen Regelkreise als Maschinenparameter in der Steuerung hinterlegt. Gleiches gilt für die Zeitkonstanten Tt oder die Frequenzgänge der Filter. Auch der Maschinenparameter MP, mit dem die zweite Ableitung des Lagesollwerts xnom multipliziert wird, bevor sie dem Stromregler 3 aufgeschaltet wird, ist ein Beispiel für so einen einstellbaren Parameter.

All diese Einstellungen werden vom Hersteller einer Werkzeugmaschine vorgenommen, um die Numerische Steuerung optimal an die Werkzeugmaschine anzupassen. Teileprogramme sollen möglichst schnell möglichst maßhaltige Werkstücke mit sauberen Oberflächen produzieren.

Die WO 2006/02994 A2 offenbart ein Verfahren zur Parametrierung von Antriebsreglern einer Werkzeugmaschine mit mehreren Achsen, wobei die Antriebsregler über Maschinenparameter parametrierbar und somit auf verschiedenste Werkzeugmaschinen anpassbar sind. Hierzu werden ein oder mehrere Attribute eines Maschinenparameters mittels eines Datensatzes passend zur jeweiligen Anwendung festgelegt. Bei diesen Attributen handelt es sich zum Beispiel um Default - Werte, Grenzwerte, Informationen über die Darstellung, Zugänglichkeit und Möglichkeit zur Änderung eines Parameters. Somit lassen sich zwar einzelne Parameter gut vorab charakterisieren und an eine konkrete Maschine anpassen, eine vom aktuellen Betriebszustand einer Werkzeugmaschine abhängige Beeinflussung der Parameter ist so aber nicht möglich.

Aufgabe der Erfindung ist es, die Parametrierung einer Numerischen Steuerung und insbesondere von deren Antriebsreglern zu verbessern und völlig neue Möglichkeiten der Anpassung der Numerischen Steuerung an eine Werkzeugmaschine zu schaffen.

Diese Aufgabe wird gelöst durch eine Vorrichtung mit den Merkmalen des Anspruches 1. Vorteilhafte Ausführungsformen ergeben sich aus den Merkmalen, die in den von Anspruch 1 abhängigen Ansprüchen aufgeführt sind.

Grundgedanke der Erfindung ist es, möglichst viele der in einem Antriebsregler verwendeten Größen wie Maschinenparameter und variable Regelgrößen (Sollgrößen, Istgrößen, Hilfsgrößen wie Vorsteuerströme etc.) zugänglich zu machen, um sie als Parameter und Argumente einer nutzerdefinierten Funktion verwenden zu können. Mit dieser Funktion können dann Ausgangswerte berechnet werden, die verschiedensten Zwecken dienen können.

So können die Ausgangswerte additiv, multiplikativ oder auch als mathematische Faltung an einem Aufschaltpunkt in den Antriebsregler eingespeist werden. So kann etwa ein Geometriefehler einer Maschine vorliegen, der von einer ortsabhängigen Durchbiegung eines Trägers herrührt. Speist man die aktuelle Lage dieser Achse als Argument einer geeigneten Funktion zur Berechnung der Durchbiegung ein, so kann man den Ausgangswert dazu verwenden, eine Ausgleichsbewegung zu bewirken, die den Geometriefehler eliminiert.

Alternativ kann der Ausgangswert auch einer weiteren nutzerdefinierten Funktion als Parameter oder Argument zugeführt werden. Durch dieses Verketten von nutzerdefinierten Funktionen lassen sich komplexe Funktionen aus einem Satz einfacher Funktionen bilden.

Außerdem kann ein Ausgangswert auch dazu verwendet werden, einen eigentlich festen Maschinenparameter z.B. ortsabhängig zu variieren. Letzteres kann nützlich sein, wenn beispielsweise ein Werkzeug über einer X-Y-Ebene bewegt wird, und die Maschine in bestimmten Bereichen dieser Ebene zu Schwingungen neigt. Dann lassen sich gewisse Verstärkungsfaktoren in diesen Bereichen so anpassen, dass mechanische Resonanzen der Werkzeugmaschine nicht zu Instabilitäten des Antriebsreglers führen. In den übrigen Bereichen ist diese Anpassung nicht notwendig, dort kann dank anderer Parameter schneller und/oder genauer positioniert werden. So kann die Maschine in jedem Arbeitspunkt optimal arbeiten, und muss nicht auf den schlechtesten Arbeitspunkt parametriert werden.

Vorteilhaft kann eine Funktion aus einem Satz von Funktionen ausgewählt werden. Dies ermöglicht es, über einen Editor per Mausklick die benötigten Eingaben zur Parametrierung vorzunehmen, ohne dass tiefere Programmierkenntnisse nötig wären.

Es ist sinnvoll, Grenzwerte für den Ausgangswert einer Funktion festzulegen. Dies verhindert, dass allzu große Ausgangswerte zur Anwendung kommen, die den Antriebsregler oder einen Maschinenparameter zu stark beeinflussen. So kann beispielsweise für einen Ausgangswert, der multiplikativ aufgeschaltet wird, ein Bereich von 0,9 bis 1,1 festgelegt werden. Die zu beinflussende Größe im Antriebsregler ändert sich dann höchstens um 10 Prozent.

Die Auswahl der Regelgrößen erfolgt vorteilhaft über Zeiger auf Abgriffpunkte in den Antriebsreglern. So ist neben der Auswahl der Funktion auch die Auswahl der Parameter und Argumente in einem Editor per Mausklick möglich. Dies gilt auch für feste Maschinenparameter, die berücksichtigt werden sollen, oder für einfache Konstanten, die z.B. der Skalierung des Ausgangswertes dienen.

Ein ganz besonderer Vorteil der Erfindung liegt darin, dass die Funktionen auch über mehrere Antriebsregler wirken können, und damit z.B. Fehler durch mechanische Verkoppelungen unterschiedlicher Achsen kompensiert werden können. Die Abgriffpunkte für die Parameter und Argumente einer Funktion können nämlich durchaus in einem anderen Antriebsregler liegen als der Aufschaltpunkt des Ausgangswertes. Somit lässt sich also z.B. eine Achse abhängig vom Zustand einer ganz anderen Achse beeinflussen - und dies mit allen Möglichkeiten, die die Berücksichtigung beliebiger Funktionen mit beliebigen Eingangsgrößen bei der Berechnung des Ausgangswerts bietet.

Die vorliegende Erfindung erweitert also die Möglichkeiten zur Parametrierung einer Numerischen Steuerung ganz erheblich, und bietet insbesondere bei der Berücksichtigung von verkoppelten Achsen völlig neue Möglichkeiten.

Weitere Vorteile sowie Einzelheiten der vorliegenden Erfindung ergeben sich aus der nachfolgenden Beschreibung einer bevorzugten Ausführungsform anhand der Figuren. Dabei zeigt
- Figur 1: einen Antriebsregler mit Abgriffpunkten,
- Figur 2: ein Blockdiagramm zur Definition einer nutzerdefinierten Funktion,
- Figur 3: ein Blockdiagram zur Beeinflussung von Maschinenparametern.

Die oben bereits erklärte Figur 1 zeigt einen Antriebsregler für eine Achse einer Werkzeugmaschine. Es sind zahlreiche Abgriffpunkte wnom, wact, Iqnom, Iqact, Unom, vnom, anom, I_int für zeitlich variable Regelgrößen eingezeichnet, die z.B. in einem Editor zum Erstellen von nutzerdefinierten Funktionen zur Auswahl stehen. Beispiele für solche variablen Regelgrößen sind die Soll- und Istwerte der Lage xnom, xact, und der Geschwindigkeit wnom, wact des jeweiligen Antriebs, oder der Ströme Iqnom, Iqact und Spannungen Unom im Motor. Aber auch feste Größen wie Verstärkungsfaktoren Kp, Ki, Kd und sonstige Maschinenparameter MP, Tt können sinnvolle Werte zur Berücksichtigung in einer nutzerdefinierten Funktion sein.

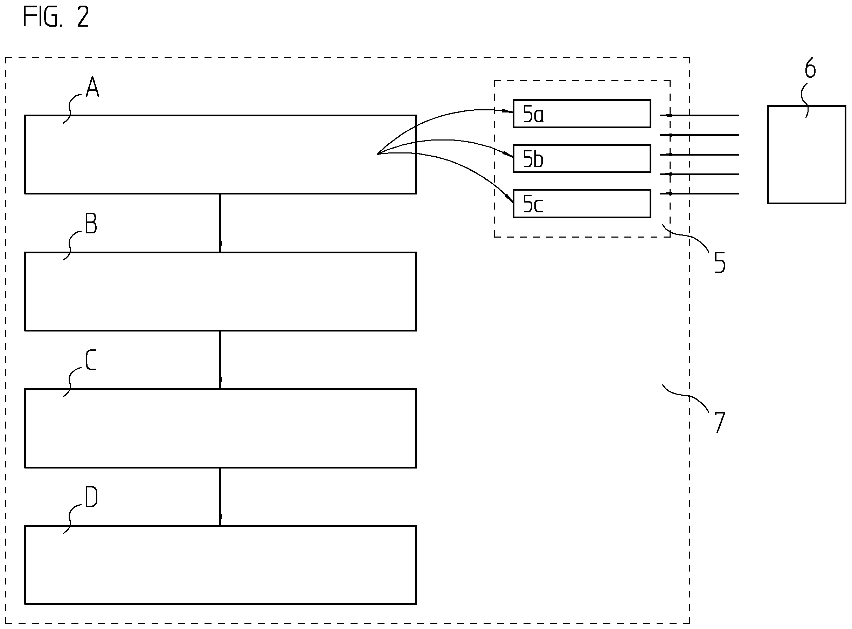

Die Figur 2 zeigt ein Blockschaltbild zur Definition einer nutzerdefinierten Funktion anhand eines UCCS-Bolcks 7 (User Configurable Controller Structure). Wie erwähnt ist es nützlich, wenn die eigentliche Funktion aus einer Funktionsbibliothek 5 ausgewählt werden kann. Diese Bibliothek 5 enthält beispielsweise Polynome unterschiedlichen Grades 5a, trigonometrische Funktionen 5b oder auch Filter 2. Ordnung 5c. Alternativ könnte man auch mit einem einzigen Polynom höherer Ordnung arbeiten, mit dessen Hilfe beliebige Funktionen angenähert werden können. Die Auswahl geeigneter Parameter und Argumente für so ein Polynom ist dann allerdings recht aufwändig.

Ein erster Schritt A zur Definition einer nutzerspezifischen Funktion ist vorteilhaft also die Auswahl einer geeigneten Funktion aus einer Funktionsbibliothek 5. Zum Schritt A gehört auch, die Parameter und Argumente der Funktion mit den gewünschten variablen Regelgrößen oder festen Maschinenparametern 6 zu verknüpfen. Eingangswerte der Funktion können beliebige Reglergrößen und Maschinenparameter aus dem Regelkreis sein, oder feste Werte zur Skalierung, oder auch der Ausgangswert eines anderen UCCS-Blocks.

So sei für ein quadratisches Polynom Y = a0 + a1*X + a2_{*}X² als ausgewählter Funktion die Laufvariable X das Argument der Funktion, welches mit der Istlage xact des betrachteten Antriebs verknüpft werden kann. Die Koeffizienten a0, a1, a2 seien die Parameter der quadratischen Funktion. Die Parameter können dabei festen Maschinenparametern zugeordnet, oder auch als Zahlenwert eingegeben werden.

In einem weiteren Schritt B werden bei Bedarf wie oben bereits erklärt die Grenzen für die Ausgangsgröße festgelegt, die nicht überschritten werden sollen.

Es besteht in einem Schritt C außerdem die Möglichkeit, eine weitere Funktion aufzurufen, mit der der Funktionswert bzw. die Ausgangsgröße der aktuellen Funktion als Zwischenergebnis weiter verarbeitet wird. Auf diese Weise können aus einfachen, der Funktionsbibliothek entnommenen Funktionen, komplexere Funktionen durch Verkettung einfacher Funktionen erstellt werden.

Zuletzt muss in einem Schritt D festgelegt werden, wo die Ausgangsgröße (im Beispiel des quadratischen Polynoms der Funktionswert Y) aufgeschaltet werden soll. Hierzu sind im Antriebsregler Aufschaltpunkte festgelegt. Beispiele für solche Aufschaltpunkte sind die Sollwerte von Lage xnom, Geschwindigkeit wnom und Strom Iqnom. Auch die Art der Aufschaltung muss festgelegt werden, wie oben bereits erwähnt. All diese Schritte können durch einfache Auswahl aus einer Liste von vorgegebenen Möglichkeiten erledigt werden. Dadurch ist das Einbinden einer nutzerdefinierten Funktion besonders einfach zu bewerkstelligen. Dem Hersteller von Werkzeugmaschinen kann ein einfaches, aber mächtiges Werkzeug zur Parametrierung der Numerischen Steuerung an die Hand gegeben werden.

Hat man alle Auswahlen getroffen, liegt ein vollständiger UCCS - Block 7 vor. Sein Inhalt lässt sich in einer Textdatei speichern und von der Steuerung entsprechend berücksichtigen. Die Ausgangswerte werden hierzu im schnellen Reglertakt (hochzyklischer Reglerinterrupt) berechnet. Der UCCS-Block 7 definiert die nutzerspezifische Funktion vollständig.

Der Ausdruck nutzerdefinierte Funktion ist im Sinne der Erfindung so zu verstehen, dass zumindest die Argumente und Parameter der Funktion vom Nutzer oder Anwender (das wird üblicherweise der Hersteller einer Werkzeugmaschine sein, der eine Steuerung an seine Werkzeugmaschine anpasst) mit sinnvollen Werten aus den Antriebsreglern belegt werden. Vorteilhaft wird auch die Funktion selbst vom Nutzer passend ausgewählt. Auch das Festlegen der Grenzen und des Aufschaltpunktes für die Ausgangswerte sind in diesem Sinne nutzerdefiniert.

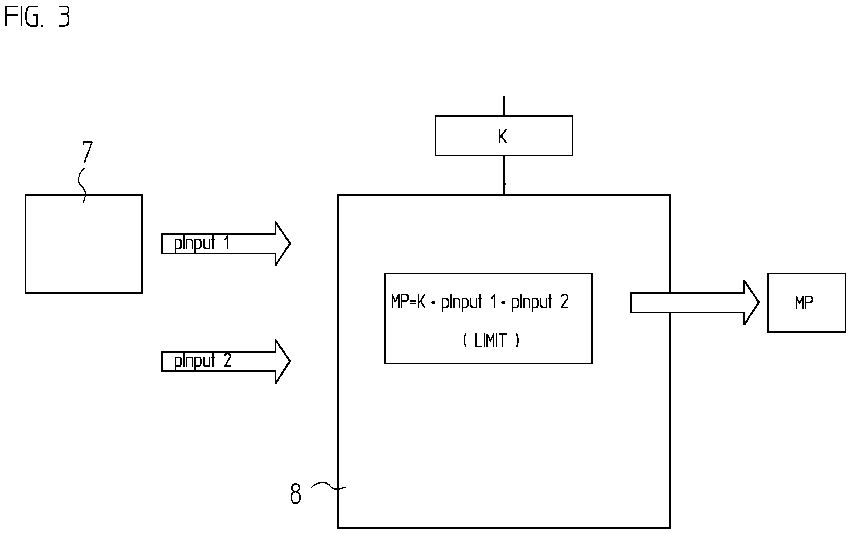

Die Figur 3 deutet eine weitere, oben bereits erwähnte Möglichkeit zur Verwendung des Ausgangswerts einer nutzerspezifischen Funktion an. So lässt sich ein Maschinenparameter MP ganz einfach dadurch neu berechnen, dass er als Produkt zweier Eingangsgrößen plnput1, plnput2 erzeugt wird, von denen beispielsweise eine der Ausgangswert einer nutzerdefinierten Funktion ist. Es ist außerdem nützlich, wenn dazu noch eine Konstante K zur Skalierung multipliziert werden kann, und Grenzwerte LIMIT für den Parameter festgelegt werden können. Hat man alle Auswahlen getroffen, liegt ein vollständiger UCCP - Block 8 vor (User Configurable Controller Parameter), mit dessen Hilfe ein Maschinenparameter gesetzt werden kann. Ein UCCP - Block 8 benötigt deutlich weniger Benutzereingaben und lässt sich von einer Numerischen Steuerung wesentlich schneller abarbeiten als ein UCCS - Block 7, so dass er für einfache Verknüpfungen zweier Eingangsgrößen plnput1, plnput2 zur Bildung einer Ausgangsgröße MP eine einfachere und schnellere Alternative bildet.

## Patentansprüche

1. Numerische Steuerung zum Betreiben einer Werkzeugmaschine mit mehreren Achsen, mit einem Antriebsregler für jede anzusteuernde Achse, wobei die Antriebsregler über Maschinenparameter (Kp, Ki, Kd, MP, Tt) parametrierbar und somit auf verschiedenste Werkzeugmaschinen anpassbar sind, **dadurch gekennzeichnet, dass** an Abgriffpunkten in den Antriebsreglern variable Regelgrößen (wnom, wact, Iqnom, Iqact, Unom, vnom, anom, I_int) und Maschinenparameter (Kp, Ki, Kd, MP, Tt) auswählbar und aus dem Antriebsregler abzweigbar sind, um als Argumente oder Parameter einer nutzerdefinierten Funktion zur Berechnung eines Ausgangswerts herangezogen zu werden, wobei der Ausgangswert der funktionsabhängigen Beeinflussung von einem der Antriebsregler dient, indem der Ausgangswert additiv, multiplikativ oder durch eine mathematische Faltung zu einem Aufschaltpunkt in einem der Antriebsregler zurückgeführt ist.

2. Numerische Steuerung nach Anspruch 1, **dadurch gekennzeichnet, dass** die nutzerdefinierte Funktion aus einer Mehrzahl von Funktionen (5a, 5b, 5c) auswählbar ist, die in einer Funktionsbibliothek (5) zur Verfügung gestellt sind.

3. Numerische Steuerung nach Anspruch 2, **dadurch gekennzeichnet, dass** der Ausgangswert einer ersten ausgewählten Funktion (5a, 5b, 5c) der Funktionsbibliothek (5) als Argument oder Parameter einer zweiten ausgewählten Funktion (5a, 5b, 5c) der Funktionsbibliothek (5) verwendet ist, so dass eine nutzerdefinierte Funktion gebildet ist, die eine Verkettung von in der Funktionsbibliothek (5) zur Verfügung stehenden Funktionen (5a, 5b, 5c) ist.

4. Numerische Steuerung nach Anspruch 1, **dadurch gekennzeichnet, dass** mittels des Ausgangswerts ein Maschinenparameter (Kp, Ki, Kd, MP, Tt) bestimmt ist.

5. Numerische Steuerung nach Anspruch 1, **dadurch gekennzeichnet, dass** für den Ausgangswert ein Grenzwert (LIMIT) definierbar ist.

6. Numerische Steuerung nach Anspruch 1, **dadurch gekennzeichnet, dass** wenigstens ein Abgriffpunkt für ein Argument oder einen Parameter der nutzerdefinierten Funktion in einem anderen Antriebsregler liegt als der Aufschaltpunkt.

7. Numerische Steuerung nach Anspruch 1, **dadurch gekennzeichnet, dass** die Abgriffpunkte für die nutzerdefinierte Funktion in unterschiedlichen Antriebsreglern liegen.

8. Numerische Steuerung nach Anspruch 6 oder 7, **dadurch gekennzeichnet, dass** die nutzerdefinierte Funktion eine mechanische Verkoppelung von unterschiedlichen Achsen der Werkzeugmaschine berücksichtigt.

## Claims

1. Numerical control for operating a machine tool comprising a number of axles, with a drive controller for each axle to be controlled, wherein the drive controllers can be parameterized by machine parameters (Kp, Ki, Kd, MP, Tt) and in this way are adaptable for a wide variety of machine tools, **characterized in that** controlled variables (wnom, wact, Iqnom, Iqact, Unom, vnom, anom, I_int) and machine parameters (Kp, Ki, Kd, MP, Tt) can be selected at tapping points in the drive controllers and can be branched off from the drive controller in order to be used as arguments or parameters of a user-defined function for the calculation of an output value, wherein the output value serves for the function-dependent influencing of one of the drive controllers, by the output value being returned additively, multiplicatively or by a mathematical convolution to an injection point in one of the drive controllers.

2. Numerical control according to Claim 1, **characterized in that** the user-defined function is selectable from a plurality of functions (5a, 5b, 5c) that are made available in a function library (5).

3. Numerical control according to Claim 2, **characterized in that** the output value of a first selected function (5a, 5b, 5c) of the function library (5) is used as an argument or a parameter of a second selected function (5a, 5b, 5c) of the function library (5), so that a user-defined function that is a string of functions (5a, 5b, 5c) available in the function library (5) is formed.

4. Numerical control according to Claim 1, **characterized in that** a machine parameter (Kp, Ki, Kd, MP, Tt) is determined by means of the output value.

5. Numerical control according to Claim 1, **characterized in that** a limit value (LIMIT) can be defined for the output value.

6. Numerical control according to Claim 1, **characterized in that** at least one tapping point for an argument or a parameter of the user-defined function lies in a different drive controller than the injection point.

7. Numerical control according to Claim 1, **characterized in that** the tapping points for the user-defined function lie in different drive controllers.

8. Numerical control according to Claim 6 or 7, **characterized in that** the user-defined function takes into account a mechanical coupling of different axles of the machine tool.

## Revendications

1. Commande numérique destinée à faire fonctionner une machine-outil équipée de plusieurs axes, comprenant un régulateur d'entraînement pour chaque axe à commander, le régulateur d'entraînement pouvant être paramétré par des paramètres de machine (Kp, Ki, Kd, MP, Tt) et pouvant ainsi être adapté à diverses machines-outils, **caractérisée en ce que** des grandeurs de régulation variables (wnom, wact, Iqnom, Iqact, Unom, vnom, anom, I_int) et des paramètres de machine (Kp, Ki, Kd, MF, Tt) peuvent être sélectionnés au niveau de points de prélèvement dans les régulateurs d'entraînement et peuvent être dérivés hors du régulateur d'entraînement afin d'être utilisés comme arguments ou paramètres d'une fonction définie par l'utilisateur en vue de calculer une valeur de sortie, la valeur de sortie servant à influencer l'un des régulateurs d'entraînement en dépendance de la fonction **en ce que** la valeur initiale est renvoyée vers un point d'entrée en ligne dans l'un des régulateurs d'entraînement par addition, multiplication ou par une convolution mathématique.

2. Commande numérique selon la revendication 1, **caractérisée en ce que** la fonction définie par l'utilisateur peut être sélectionnée parmi une pluralité de fonctions (5a, 5b, 5c) qui sont mises à disposition dans une bibliothèque de fonctions (5).

3. Commande numérique selon la revendication 2, **caractérisée en ce que** la valeur de sortie d'une première fonction sélectionnée (5a, 5b, 5c) de la bibliothèque de fonctions (5) est utilisée comme argument ou paramètre d'une deuxième fonction sélectionnée (5a, 5b, 5c) de la bibliothèque de fonctions (5), de manière à former une fonction définie par l'utilisateur qui est un enchaînement des fonctions (5a, 5b, 5c) mises à disposition dans la bibliothèque de fonctions (5).

4. Commande numérique selon la revendication 1, **caractérisée en ce qu'**un paramètre de machine (Kp, Ki, Kd, MP, Tt) est déterminé au moyen de la valeur de sortie.

5. Commande numérique selon la revendication 1, **caractérisée en ce qu'**une valeur limite (LIMIT) peut être définie pour la valeur de sortie.

6. Commande numérique selon la revendication 1, **caractérisée en ce qu'**au moins un point de prélèvement pour un argument ou un paramètre de la fonction définie par l'utilisateur se trouve dans un autre régulateur d'entraînement que le point d'entrée en ligne.

7. Commande numérique selon la revendication 1, **caractérisée en ce que** les points de prélèvement pour la fonction définie par l'utilisateur se trouvent dans des régulateurs d'entraînement différents.

8. Commande numérique selon la revendication 6 ou 7, **caractérisée en ce que** la fonction définie par l'utilisateur tient compte d'un accouplement mécanique de différents axes de la machine-outil.
